# EUROPÄISCHE PATENTSCHRIFT

(11) **EP 3 137 397 B1**
(45) Veröffentlichungstag und Bekanntmachung des Hinweises auf die Patenterteilung: **25.09.2019**
(21) Anmeldenummer: 15726108.2
(22) Anmeldetag: 28.05.2015
(51) Int. Cl.: B65G 23/20, B61B 13/12, B65G 35/06

(54) **ANTRIEBSEINHEIT**
DRIVE UNIT
UNITÉ D'ENTRAÎNEMENT

(30) Priorität: 30.05.2014 DE 102014107654
(43) Veröffentlichungstag der Anmeldung: 08.03.2017
(73) Patentinhaber: Weiss GmbH, 74722 Buchen (Odw.) (DE)
(72) Erfinder: WEISS, Uwe, 74722 Buchen (DE)
(74) Vertreter: Manitz Finsterwald Patent- und Rechtsanwaltspartnerschaft mbB
(86) Internationale Anmeldenummer: PCT/EP2015/061806
(87) Internationale Veröffentlichungsnummer: WO 2015/181277

(56) Entgegenhaltungen:
- EP-A1- 0 144 478
- WO-A1-80/00559
- DE-U1- 8 913 408
- JP-A- 2011 105 427
- US-A- 5 881 649
- US-A1- 2014 069 780

## Beschreibung

Die vorliegende Erfindung betrifft eine Antriebseinheit zum Antrieb eines entlang einer Transportbahn verfahrbaren Schlittens mit einer zu einer Drehbewegung antreibbaren Kurventrommel, welche eine Antriebsnut für einen Eingriff eines an dem Schlitten angeordneten Mitnehmers aufweist, und mit einer Steuereinrichtung zur Steuerung des Antriebs des Schlittens.

Derartige Antriebseinheiten werden beispielsweise in der Montage- und Automatisierungstechnik dazu eingesetzt, verfahrbare Schlitten mit darauf angeordneten Werkstücken positionsgenau zu den entsprechenden Bearbeitungs- und/oder Montage-Stationen zu bewegen. Hierbei kann eine Übergabe der Schlitten von einer separaten Antriebseinheit - wie etwa von einem Bandantrieb - an eine Antriebseinheit mit Kurventrommel erforderlich sein. In der Praxis ist es jedoch schwierig, das Eintreffen der Schlitten an einer sich kontinuierlich oder intermittierend drehenden Kurventrommel derart mit der Trommelbewegung abzustimmen, dass die Mitnehmer der Schlitten aus der Bewegung heraus in die Antriebsnut der Kurventrommel eingreifen. Es kann daher sein, dass die Schlitten vor der Übergabe an die Kurventrommel stark abgebremst oder sogar angehalten werden müssen, was die Effektivität der Gesamtanlage herabsetzt. Ebenso ist es hinsichtlich der Effektivität ungünstig, die Kurventrommel für die Übernahme eines Schlittens in eine definierte Drehstellung zu bewegen, da sich in der Regel wenigstens ein Mitnehmer eines vorhergehenden Schlittens in einem Eingriff mit der Antriebsnut befindet, der dann durch die Einnahme der Drehstellung bewegt würde. Das heißt die Aufnahme eines Schlittens in den Antriebsbereich der Kurventrommel beeinflusst somit die Bewegung des vor ihm befindlichen Schlittens, was in der Regel unerwünscht ist.

Die WO 80/00559 A1 offenbart eine gattungsgemäße Antriebseinheit nach dem Oberbegriff des Anspruchs 1 sowie ein Vefahren nach dem Oberbegriff des Anspruchs 9, wobei ein Transportsystem mit einander kreuzenden Rollenbahnen, auf denen Behälter mittels Transportschrauben gefördert werden. Die Transportschrauben wirken mit Vorsprüngen an der Unterseite der Behälter zusammen.

In der US 5 881 649 A ist ein Transportsystem für die Halbleiterfertigung offenbart, das zum Verfahren von Tablett-artigen Trägern auf Rollenbahnen ausgebildet ist. Der Antrieb erfolgt über Wellen mit schraubenförmig verlaufenden Magnetvorsprüngen, die mit trägerseitigen Magnetbereichen zusammenwirken.

Es ist eine Aufgabe der Erfindung, eine Antriebseinheit bereitzustellen, die eine zuverlässige, ruckfreie und schnelle Übernahme eines Schlittens von einer separaten Antriebseinheit ermöglicht.

Die Lösung der Aufgabe erfolgt durch eine Antriebseinheit mit den Merkmalen des Anspruchs 1.

Erfindungsgemäß weist die Kurventrommel einen ersten Trommelabschnitt und einen davon getrennten zweiten Trommelabschnitt auf, wobei die Trommelabschnitte unabhängig voneinander antreibbar sind und wobei die Steuereinrichtung dazu ausgebildet ist, den Schlitten nach einer Übernahme von einer separaten Antriebseinheit mittels des ersten Trommelabschnitts zu beschleunigen und den beschleunigten Schlitten dem zweiten Trommelabschnitt zuzuführen. Die Kurventrommel ist also in wenigstens zwei Trommelabschnitte geteilt, sodass zwei axiale Abschnitte der Antriebsnut gegeneinander drehbar sind. Somit kann der erste Trommelabschnitt für eine Übernahme eines Schlittens in eine definierte Drehstellung bewegt werden, während der zweite Trommelabschnitt davon unbeeinflusst - unter gleichmäßiger oder ungleichmäßiger Drehung - einen oder mehrere vorangegangene Schlitten weiterbefördert. Nach einer entsprechenden Beschleunigung des Schlittens kann ein ungehinderter Übertritt des Mitnehmers von dem ersten Trommelabschnitt auf den zweiten Trommelabschnitt erfolgen. Der erste Trommelabschnitt stellt somit gewissermaßen eine Empfangsnut zur Verfügung, die einen ungehinderten Eingriff eines Mitnehmers aus der Bewegung des Schlittens heraus und eine Beschleunigung des zugehörigen Schlittens auf einen gewünschten Wert ermöglicht. Die Erfindung ermöglicht daher einen beträchtlich höheren Durchsatz bei Transportsystemen, welche einen Kurventrommel-Antrieb und einen zusätzlichen separaten Antrieb aufweisen. Der Kurventrommel-Antrieb wird insbesondere in Abschnitten der Transportbahn vorgesehen, in denen es auf eine hochpräzise Positionierung des Schlittens ankommt, z. B. bei Stationen, an denen ein auf dem Schlitten angeordnetes Werkstück bearbeitet wird.

Der erste Trommelabschnitt wird zu einer Drehbewegung angetrieben und dabei beschleunigt, bis die Drehgeschwindigkeit des ersten Trommelabschnitts der Drehgeschwindigkeit des zweiten Trommelabschnitts entspricht. Erfindungsgemäß umfasst die Antriebsnut im Bereich des ersten Trommelabschnitts einen sich parallel zu einer Transportrichtung und/oder parallel zu einer Drehachse der Kurventrommel erstreckenden geraden Abschnitt und einen sich daran anschließenden schraubenförmig verlaufenden Abschnitt.

Vorzugsweise schließt der zweite Trommelabschnitt unmittelbar an den ersten Trommelabschnitt an, um einen glatten Übergang zu gewährleisten. In vielen praktischen Fällen ist es ausreichend, wenn die Kurventrommel genau zwei separat antreibbare Trommelabschnitte aufweist.

Es kann vorgesehen sein, dass der erste und der zweite Trommelabschnitt koaxial zueinander angeordnet sind, insbesondere wobei der erste Trommelabschnitt auf einer Welle des zweiten Trommelabschnitts drehbar gelagert ist. Dies ermöglicht eine besonders einfache Konstruktion.

Eine spezielle Ausgestaltung der Erfindung sieht vor, dass die Antriebsnut im Bereich des ersten Trommelabschnitts einen schraubenförmig verlaufenden Abschnitt aufweist, der sich über einen Drehwinkel von höchstens 180° erstreckt. Dementsprechend kann der erste Trommelabschnitt in axialer Richtung relativ kurz ausgebildet sein, um Bauraum zu sparen.

Die Antriebsnut kann im Bereich des ersten Trommelabschnitts einen eingangsseitigen Einführbereich aufweisen, der sich parallel zu einer Transportrichtung des Schlittens und/oder parallel zu einer Drehachse der Kurventrommel erstreckt. Dies ermöglicht einen glatten und ruckfreien Eingriff eines sich in der Transportrichtung bewegenden Mitnehmers in die Antriebsnut der Kurventrommel.

Die Antriebsnut kann ferner in einem an den zweiten Trommelabschnitt angrenzenden Bereich des ersten Trommelabschnitts einen Abführbereich aufweisen, in welchem eine Steigung der Antriebsnut relativ zu einer Drehachse der Kurventrommel zumindest ein einem dem zweiten Trommelabschnitt zugewandten Endabschnitt einer Steigung der Antriebsnut in einem angrenzenden Eingangsabschnitt des zweiten Trommelabschnitts entspricht. Dadurch ist ein ruckfreier Übergang eines Schlittens von dem ersten Trommelabschnitt auf den zweiten Trommelabschnitt gewährleistet.

Es können Mittel zum Bestimmen einer momentanen Drehgeschwindigkeit des zweiten Trommelabschnitts und gegebenenfalls des ersten Trommelabschnitts vorgesehen sein, wobei die Steuereinrichtung dazu ausgebildet ist, den ersten Trommelabschnitt nach einer Übernahme des Schlittens von einer Anfangs-Drehgeschwindigkeit, welche vorzugsweise Null beträgt, auf eine End-Drehgeschwindigkeit zu beschleunigen, welche der momentanen Drehgeschwindigkeit des zweiten Trommelabschnitts entspricht. Beispielsweise kann ein Drehsensor die Drehzahl einer Welle des zweiten Trommelabschnitts und gegebenenfalls des ersten Trommelabschnitts erfassen, als Signal ausgeben und an die Steuereinrichtung übermitteln. Es kann somit mit Hilfe der Steuereinrichtung dafür gesorgt werden, dass der Schlitten beim Übertritt auf den zweiten Trommelabschnitt keine ruckartige Beschleunigung oder Verzögerung erfährt.

Die Steuereinrichtung kann dazu ausgebildet sein, den zweiten Trommelabschnitt zu einer Drehbewegung mit einer konstanten Drehgeschwindigkeit anzutreiben. Dies ist insofern günstig, als dass ein derartiger Antrieb des zweiten Trommelabschnitts einfach zu realisieren ist. Aber auch eine variable Drehgeschwindigkeit des zweiten Trommelabschnitts ist denkbar.

Es können auch Mittel zum Erfassen einer momentanen Drehstellung des ersten Trommelabschnitts vorgesehen sein, wobei die Steuereinrichtung dazu ausgebildet ist, den ersten Trommelabschnitt nach einem Zuführen des Schlittens an den zweiten Trommelabschnitt für eine Übernahme eines nachfolgenden Schlittens in eine vordefinierte Drehstellung zu bewegen. Zum Beispiel kann ein einfacher Drehgeber die Drehstellung des ersten Trommelabschnitts erfassen, als Signal ausgeben und an die Steuereinrichtung übermitteln. Es kann somit über die Steuerung dafür gesorgt werden, dass der Mitnehmer des Schlittens bei dessen Ankunft am ersten Trommelabschnitt in gewünschter Weise auf eine Einführöffnung der Antriebsnut trifft. Es kann auch ein Drehsensor vorgesehen sein, der dem zweiten Trommelabschnitt zugeordnet ist, um die relative Winkellage der beiden Trommelabschnitte erfassen und bei der Steuerung des ersten Trommelabschnitts berücksichtigen zu können.

Die Erfindung sieht vor, dass die Antriebsnut im Bereich des ersten Trommelabschnitts einen sich parallel zu einer Transportrichtung und/oder parallel zu einer Drehachse der Kurventrommel erstreckenden geraden Abschnitt und einen sich daran anschließenden schraubenförmig verlaufenden Abschnitt umfasst. Der gerade Abschnitt ermöglicht einen ruckfreien Eingriff eines ankommenden Mitnehmers, während der schraubenförmig verlaufende Abschnitt zur Beschleunigung eines eingreifenden Mitnehmers dient.

Bevorzugt ist die Steuereinrichtung dazu ausgebildet, den ersten Trommelabschnitt zu einer den Schlitten beschleunigenden Drehbewegung anzutreiben, sobald der Mitnehmer eines übernommenen Schlittens von dem geraden Abschnitt in den schraubenförmig verlaufenden Abschnitt gelangt ist. Mit anderen Worten wird in dem geraden Abschnitt eine den Schlitten beschleunigende Drehbewegung vermieden, um unerwünschte Druckkräfte an den Seitenwänden des geraden Abschnitts der Antriebsnut zu verhindern.

Die Antriebsnut des zweiten Trommelabschnitts kann eine konstante Steigung aufweisen, um eine gleichmäßige Transportbewegung sicherzustellen. Bei Bedarf können jedoch auch einzelne Bereiche mit konstanter oder variierender Steigung durch so genannte Rastgänge unterbrochen sein, innerhalb welcher der Schlitten trotz sich weiterdrehender Kurventrommel stillsteht, um z. B. eine Werkstückbearbeitung zu ermöglichen. Um bestimmte Bewegungsprofile der Schlitten umzusetzen, kann die Steigung der Antriebsnut in dem zweiten Trommelabschnitt variieren. Z. B. kann die Antriebsnut einen oder mehrere Rastgänge und/oder Abschnitte mit unterschiedlichen Steigungen aufweisen.

Die Erfindung betrifft auch ein Verfahren nach dem Anspruch 9 zum Transportieren von Objekten entlang einer Transportbahn, bei welchem ein entlang der Transportbahn verfahrbarer Schlitten, auf dem zumindest ein Objekt anzuordnen ist, von einem Transferabschnitt der Transportbahn auf einen für eine Bearbeitung der Objekte vorgesehenen Prozessabschnitt der Transportbahn überführt wird, wobei der Schlitten in dem Prozessabschnitt mittels einer zu einer Drehbewegung antreibbaren ersten Kurventrommel angetrieben wird, welche eine Antriebsnut aufweist, in die ein an dem Schlitten angeordneter Mitnehmer eingreift, und wobei der Schlitten in dem Transferabschnitt mittels eines separaten Antriebs, insbesondere mittels eines Band- oder Linearantriebs, zu einer Bewegung angetrieben wird.

Wie vorstehend angegeben ist es beim Transportieren von Objekten entlang einer Transportbahn mittels eines Schlittens und separater Antriebe schwierig, einen schnellen und ruckfreien Übertritt des Schlittens von einem Bahnabschnitt auf einen anderen, mit einem anderen Antriebstyp versehenen Bahnabschnitt sicherzustellen.

Erfindungsgemäß wird daher der Schlitten zum Überführen von dem Transferabschnitt in den Prozessabschnitt mittels einer unabhängig von der ersten Kurventrommel antreibbaren zweiten Kurventrommel - positiv oder negativ - beschleunigt, wobei die zweite Kurventrommel - in Transportrichtung gesehen - insbesondere unmittelbar hinter der ersten Kurventrommel angeordnet ist.

Die zweite Kurventrommel kann für eine Übernahme eines Schlittens in eine definierte Drehstellung bewegt werden, während die erste Kurventrommel davon unbeeinflusst unter fortwährender gleichmäßiger oder zeitlich variierender Drehung einen oder mehrere vorangegangene Schlitten weiterbefördert. Nach einer entsprechenden Beschleunigung des Schlittens kann ein ungehinderter Übertritt des Mitnehmers von dem Transferabschnitt in den Prozessabschnitt erfolgen.

Erfindungsgemäß wird eine momentane Drehgeschwindigkeit der ersten Kurventrommel bestimmt und die zweite Kurventrommel wird nach einer Übernahme des Schlittens von einer Anfangs-Drehgeschwindigkeit, welche vorzugsweise Null beträgt, auf eine End-Drehgeschwindigkeit beschleunigt, welche der momentanen Drehgeschwindigkeit der ersten Kurventrommel entspricht. Dies ermöglicht einen ruckfreien Übergang von dem Transferabschnitt auf den Prozessabschnitt. Es kann ferner vorgesehen sein, dass die erste Kurventrommel zu einer Drehbewegung mit einer konstanten Drehgeschwindigkeit angetrieben wird und/oder dass die Antriebsnut der zweiten Kurventrommel eine konstante Steigung aufweist. Dies ermöglicht eine gleichmäßige Transportbewegung innerhalb des Prozessabschnitts. Grundsätzlich könnte die zweite Kurventrommel auch wenigstens einen Rastgang oder Abschnitte mit unterschiedlichen Steigungen der Antriebsnut aufweisen.

Eine Ausführungsform der Erfindung sieht vor, dass eine momentane Drehstellung der zweiten Kurventrommel erfasst wird und die zweite Kurventrommel nach einem Zuführen des beschleunigten Schlittens an die erste Kurventrommel für eine Übernahme eines nachfolgenden Schlittens in eine vordefinierte Drehstellung gedreht wird.

Vorzugsweise wird die zweite Kurventrommel zu einer den Schlitten beschleunigenden Drehbewegung angetrieben, sobald der Mitnehmer des Schlittens von einem sich parallel zu einer Transportrichtung und/oder parallel zu einer Drehachse der zweiten Kurventrommel erstreckenden geraden Abschnitt einer Antriebsnut der zweiten Kurventrommel in einen sich daran anschließenden schraubenförmig verlaufenden Abschnitt der Antriebsnut gelangt ist. In dem geraden Abschnitt wird also eine Drehbewegung vermieden, um unerwünschte Druckkräfte an den Seitenwänden des geraden Abschnitts der Antriebsnut zu verhindern.

Bevorzugt wird die Drehstellung der ersten Kurventrommel mittels eines entsprechenden Sensors erfasst, um die Drehbewegung der ersten Kurventrommel so zu beeinflussen, dass die beiden Kurventrommeln zur Übergabe des Schlittens synchronisiert werden.

Ferner betrifft die Erfindung eine Transportvorrichtung zum Transportieren von Objekten entlang einer Transportbahn mit den Merkmalen des Anspruchs 14, mit wenigstens einem entlang der Transportbahn verfahrbaren Schlitten, der zur Aufnahme wenigstens eines zu transportierenden Objekts ausgebildet ist, und mit Mitteln zum gesteuerten Antreiben des Schlittens.

Transportvorrichtungen dieser Art dienen unter anderem in der Montage- und Automatisierungstechnik dazu, Werkstücke zu einer Bearbeitungs- und/oder Montage-Station zu bewegen. Ein oder mehrere Werkstücke werden hierzu auf dem Schlitten angeordnet, welcher z. B. an einer Schienenanordnung verschiebbar geführt ist. Die durch die Schienenanordnung definierte Transportbahn kann offen oder geschlossen sein sowie gerade und gekrümmte Abschnitte umfassen. Häufig werden die Werkstücke nacheinander mehreren Bearbeitungs- und/oder Montage-Stationen zugeführt. Zum Antrieb des Schlittens kann eine Kurventrommel wie vorstehend beschrieben vorgesehen sein. Ein Vorteil eines Antriebs mittels einer Kurventrommel ist die damit verbundene hohe Positioniergenauigkeit. Allerdings sind mit einem solchen Antrieb im Allgemeinen keine hohen Verfahrgeschwindigkeiten erzielbar. Innerhalb einer Bearbeitungs- und/oder Montage-Station stellt dies im Allgemeinen keinen großen Nachteil dar, da die entsprechenden Verfahrstrecken meist relativ kurz sind. Bei vielen Anwendungen sind jedoch zwischen den einzelnen Bearbeitungs- und/oder Montage-Stationen relativ lange Verfahrstrecken zurückzulegen. Ein Antrieb mittels Kurventrommel führt hier zu beträchtlichen Verzögerungen im Gesamtprozess. Außerdem sind präzise gefertigte Kurventrommeln sehr aufwändig in der Herstellung.

Erfindungsgemäß umfasst die Transportbahn wenigstens einen für eine Bearbeitung der Objekte vorgesehenen Prozessabschnitt und wenigstens einen davon getrennten Transferabschnitt, wobei zum Antrieb des Schlittens in dem Prozessabschnitt eine Antriebseinheit mit wenigstens einer zu einer Drehbewegung antreibbaren Kurventrommel vorgesehen ist, welche eine Antriebsnut aufweist, in die ein an dem Schlitten angeordneter Mitnehmer eingreift, und wobei zum Antrieb des Schlittens in dem Transferabschnitt ein Linearmotor mit zumindest einem ortsfesten Statorelement und einem an dem Schlitten angeordneten Läuferelement vorgesehen ist.

Bei dem Prozessabschnitt kann es sich um einen beliebigen Bereich der Transportbahn handeln, in welchem während des Betriebs der Transportvorrichtung ein die Bearbeitung und/oder die Montage der Objekte betreffender Prozess stattfindet. Demgegenüber ist in dem Transferabschnitt der Transportbahn beispielsweise lediglich ein Fördern der Objekte entlang einer Förderrichtung erforderlich. Die Erfindung beruht unter anderem auf der Erkenntnis, dass in Prozessabschnitten in der Regel eine hohe Positioniergenauigkeit, jedoch keine hohe Transportgeschwindigkeit erforderlich ist, während es in Transferabschnitten umgekehrt auf eine hohe Transportgeschwindigkeit, jedoch nicht auf eine hohe Positioniergenauigkeit ankommt. Daher kann die Effektivität einer Transportvorrichtung dadurch gesteigert werden, dass in den Transferabschnitten ein schneller und kostengünstiger Linearantrieb vorgesehen ist, während in denjenigen Bereichen, in denen es in besonderer Weise auf eine hohe Positioniergenauigkeit ankommt, ein Kurventrommel-Antrieb verwendet wird. Erfindungsgemäß ist vorgesehen, dass die in dem Prozessabschnitt vorgesehene Antriebseinheit wie vorstehend beschrieben ausgebildet ist und/oder dass zum gesteuerten Antreiben des Schlittens eine Steuereinrichtung vorgesehen ist, welche dazu ausgebildet ist, ein wie vorstehend beschriebenes Verfahren durchzuführen.

Grundsätzlich kann die Transportbahn eine beliebige Geometrie aufweisen, um den jeweiligen Anforderungen Rechnung zu tragen. Bei einer kreisförmigen Geometrie der Transportbahn wird - funktionell gesehen - im Wesentlichen ein Rundschalttisch realisiert. Eine derartige Transportvorrichtung weist die vorstehend beschriebenen Vorteile auf und ist daher gegenüber herkömmlichen Rundschalttischen flexibler einsetzbar. Unabhängig von der Geometrie der Transportbahn ist es erfindungsgemäß nämlich ohne Probleme möglich, mehrere Prozessabschnitte vorzusehen, die durch Transferabschnitte miteinander verbunden sind. Während bei einem klassischen Rundschalttisch alle auf dem Drehteller des Tischs angeordneten Werkstücke synchron bewegt werden, kann bei einer Transportvorrichtung gemäß der vorliegenden Erfindung an verschiedenen Arbeitsstationen die jeweils optimale Bewegungscharakteristik separat und unabhängig von den für die anderen Arbeitsstationen (Prozessabschnitte) der Transportvorrichtung vorgesehenen Bewegungsabläufen eingestellt werden. Dies gilt auch für Transportvorrichtungen deren Antrieb im Bereich der Transferabschnitt anstelle eines Linearantriebs ein andersartiger Antrieb ist, z.B. ein Zahnriemenantrieb oder dergleichen.

Zur Erzeugung einer Vortriebsbewegung in den Transferabschnitten können auch verschiedene Antriebsarten kombiniert werden. Beispielsweise sind unterschiedliche Transferabschnitten mit unterschiedlichen Antriebskonzepten versehen und/oder die Transferabschnitte selbst weisen bei Bedarf abschnittsweise unterschiedliche Antriebsarten auf.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine vereinfachte Draufsicht auf eine erfindungsgemäße Transportvorrichtung zum Transportieren von Objekten entlang einer Transportbahn.
- Fig. 2: ist eine perspektivische Ansicht einer Antriebseinheit der in Fig. 1 gezeigten Transportvorrichtung.
- Fig. 3: ist eine teilweise Draufsicht auf die Antriebseinheit gemäß Fig. 2.
- Fig. 4: ist eine perspektivische Ansicht einer Kurventrommel der in Fig. 2 dargestellten Antriebseinheit.
- Fig. 5A: zeigt die Kurventrommel gemäß Fig. 4 in einer Draufsicht.
- Fig. 5B: zeigt die Kurventrommel gemäß Fig. 4 in einer Seitenansicht.

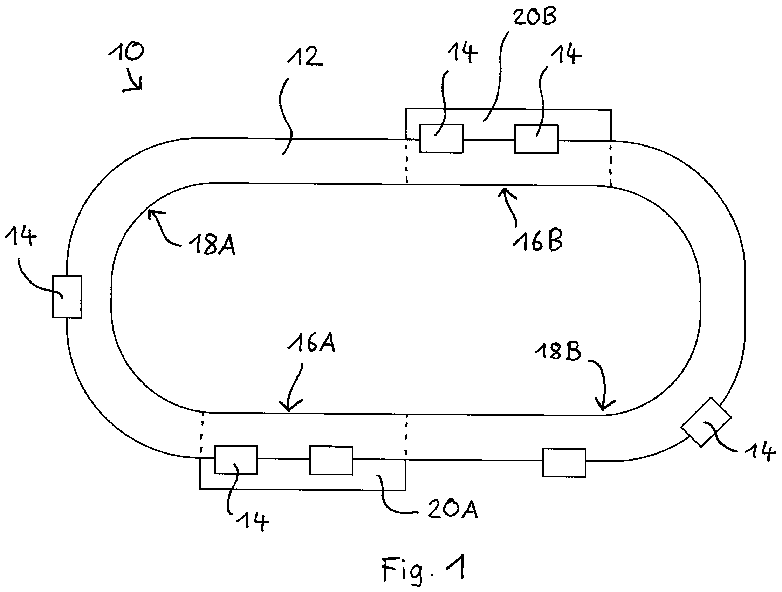

Die in Fig. 1 dargestellte Transportvorrichtung 10 dient zum Transport von nicht gezeigten Objekten und umfasst eine Schiene 12, die eine geschlossene Transportbahn definiert, entlang welcher die Objekte - z.B. Werkstücke - transportiert werden. Es versteht sich, dass die Transportbahn auch offen sein könnte und/oder einen anderen, z. B. komplexeren Verlauf aufweisen könnte. Die Transportbahn kann auch einen Kreis bilden, so dass letztlich - funktionell gesehen - ein Rundschalttisch realisiert ist, bei dem Objekte unabhängig voneinander bewegt werden können.

Mehrere Schlitten 14 sind gleitend oder rollend verfahrbar an der Schiene 12 geführt. Die zu transportierenden Objekte sind auf nicht gezeigten Transportplattformen der Schlitten 14 angeordnet und werden mit diesen entlang der Transportbahn verfahren. Die Transportbahn ist bei dem dargestellten Beispiel in zwei für eine Bearbeitung der Objekte vorgesehenene, durch gestrichelte Linien angedeutete Prozessabschnitte 16A, 16B und zwei jeweils dazwischen liegende Transferabschnitte 18A, 18B unterteilt. Je nach Anwendung kann die Transportbahn beliebige Anzahlen von Prozessabschnitten 16A, 16B und Transferabschnitten 18A, 18B aufweisen.

Der Antrieb der Schlitten 14 beruht auf einer Kombination zweier prinzipiell unterschiedlicher Antriebssysteme. In den beiden Transferabschnitten 18A, 18B erfolgt der Antrieb der Schlitten 14 mittels einer nicht gezeigten Linearmotor-Anordnung, welche in grundsätzlich bekannter Weise entlang der Schiene 12 angeordnete, ortsfeste Statorelemente und jeweilige, an den Schlitten 14 angeordnete Läuferelemente umfasst. Die Schlitten 14 können mittels der Linearmotor-Anordnung mit hoher Geschwindigkeit zwischen den Prozessabschnitten 16A, 16B verfahren werden. Zur Steuerung der Linearmotor-Anordnung ist eine elektronische Steuereinheit vorgesehen, welche in Fig. 1 nicht dargestellt ist.

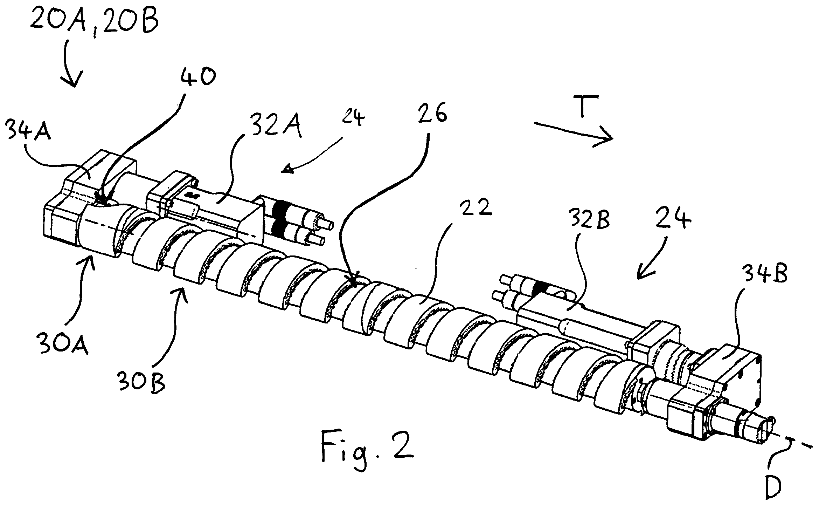

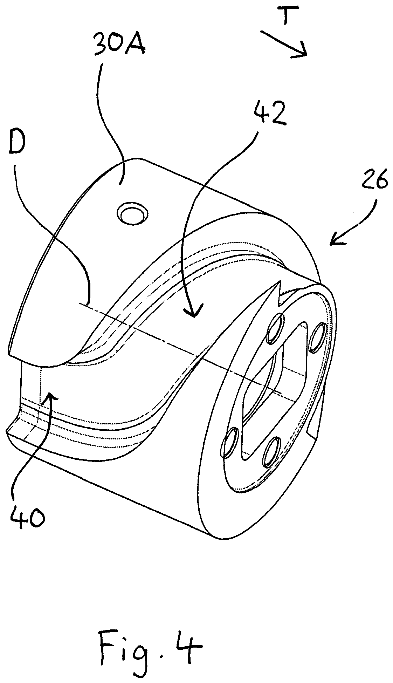

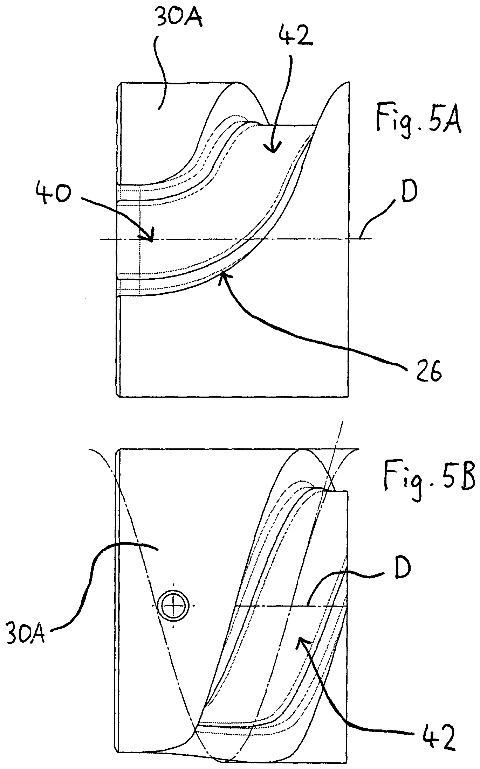

In den beiden Prozessabschnitten 16A, 16B erfolgt der Antrieb der Schlitten 14 nicht mittels einer Linearmotor-Anordnung, sondern mittels jeweiliger Antriebseinheiten 20A, 20B, welche zu einer Drehbewegung antreibbare Kurventrommeln aufweisen, wie nachfolgend unter Bezugnahme auf Fig. 2 bis 5 genauer erläutert wird.

Jede der beiden Antriebseinheiten 20A, 20B umfasst eine Kurventrommel 22, welche mittels einer Motoranordnung 24 zu einer Drehbewegung um eine Drehachse D antreibbar ist. Die Kurventrommel 22 umfasst eine Antriebsnut 26.

Die Antriebseinheiten 20A, 20B sind jeweils derart neben der Schiene 12 (Fig. 1) angeordnet, dass an den Schlitten 14 vorgesehene, nicht dargestellte Mitnehmer in die Antriebsnut 26 eingreifen, wenn der entsprechende Schlitten 14 in den zugehörigen Prozessabschnitt 16A, 16B eintritt. Aufgrund des Zusammenwirkens der Antriebsnut 26 und dem Mitnehmer wird der betreffende Schlitten 14 in Richtung einer parallel zu der Drehachse D verlaufenden Transportrichtung T bewegt. Ein solcher Antrieb eines verfahrbaren Schlittens 14 mittels einer - je nach Bedarf - zu einer gleichförmigen oder zu einer zeitlich variierenden Drehbewegung angetriebenen Kurventrommel 22 ist grundsätzlich bekannt und ermöglicht eine hohe Positioniergenauigkeit, die für das Bearbeiten der auf dem Schlitten 14 angeordneten Objekte in den Prozessabschnitten 16A, 16B bedeutsam ist.

Um den Übertritt der Schlitten 14 von einem Transferabschnitt 18A, 18B in den sich daran anschließenden Prozessabschnitt 16A, 16B zu erleichtern, ist die Kurventrommel 22 in zwei getrennte koaxiale Trommelabschnitte 30A, 30B geteilt. Die Antriebsnut 26 ist im Bereich des Trommelabschnitts 30B im Wesentlichen schraubenförmig ausgestaltet. Sie kann grundsätzlich jedoch einen oder mehrere Rastgänge und/oder Abschnitte mit unterschiedlichen Steigungen aufweisen. Die Trommelabschnitte 30A, 30B sind mittels jeweiliger Einzel-Motoreinheiten 32A, 32B der Motoranordnung 24 sowie zugehöriger Getriebeeinheiten 34A, 34B unabhängig voneinander antreibbar.

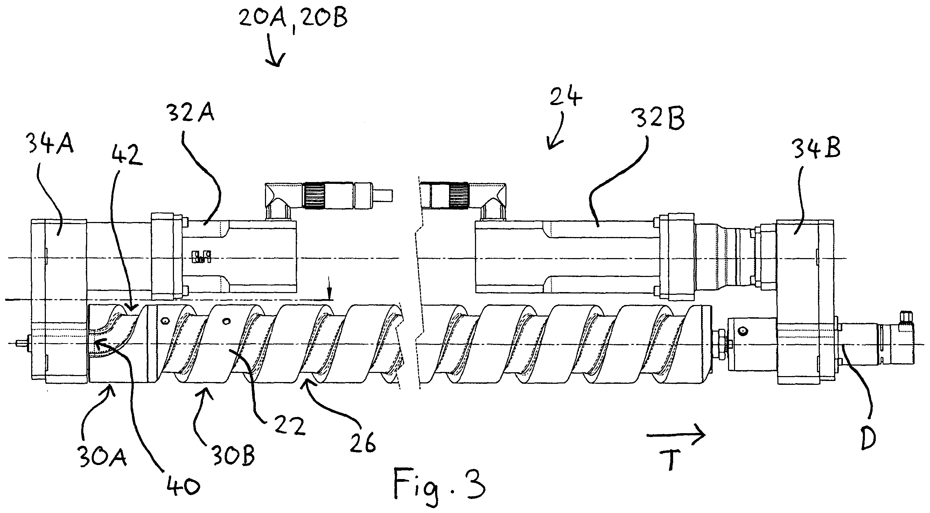

Wie aus Fig. 2 und 3 hervorgeht, ist der bezüglich der Transportrichtung T vordere erste Trommelabschnitt 30A wesentlich kürzer als der zweite Trommelabschnitt 30B. Der erste Trommelabschnitt 30A kann daher auf einer Welle des zweiten Trommelabschnitts 30B, welche dabei als Gesamtwelle der Kurventrommel 22 fungiert, drehbar gelagert sein.

Während die Antriebsnut 26 - wie bereits erläutert - im vorliegenden Beispiel im Bereich des zweiten Trommelabschnitts 30B eine konstante Steigung aufweist, umfasst sie im Bereich des ersten Trommelabschnitts 30A einen sich parallel zu der Transportrichtung T und parallel zu der Drehachse D der Kurventrommel 22 erstreckenden geraden Abschnitt 40 und einen sich daran anschließenden schraubenförmig verlaufenden Abschnitt 42. Der schraubenförmig verlaufende Abschnitt 42 weist eine Steigung auf, die der Steigung der Antriebsnut 26 im Eingangsbereich des zweiten Trommelabschnitts 30B entspricht, und er erstreckt sich über einen Drehwinkel, der hier zwischen 90° und 180° beträgt.

An den Antriebseinheiten 20A, 20B sind jeweils nicht gezeigte Sensoren vorgesehen, um die Drehgeschwindigkeiten sowie die momentanen Drehstellungen der Trommelabschnitte 30A, 30B zu erfassen. Die Sensoren stehen mit einer Steuereinrichtung in Signalverbindung. Bevorzugt bilden die den Antriebseinheiten 20A, 20B zugeordnete Steuereinrichtung und die Steuereinheit der Linearmotor-Anordnung eine gemeinsame Steuerung.

Während des Betriebs der Transportvorrichtung 10 werden von den Antriebseinheiten 20A, 20B nacheinander Schlitten 14 mit darauf angeordneten Objekten von dem bezüglich der Transportrichtung T vorangehenden Transferabschnitt 18A, 18B übernommen. Die Steuereinrichtung sorgt dafür, dass der zweite Trommelabschnitt 30B zu einer Drehbewegung mit einer an den in dem entsprechenden Prozessabschnitt 16A, 16B angepassten Drehgeschwindigkeit angetrieben wird, um ein gewünschtes Bewegungsprofil der Schlitten 14 in diesem Bereich zu erzeugen. Für die Übernahme der Schlitten 14 steht der erste Trommelabschnitt 30A still, wobei der gerade Abschnitt 40 der Antriebsnut 26 wie in Fig. 2 und 3 gezeigt nach oben weist. Ein an der Unterseite eines ankommenden Schlittens 14 vorgesehener Mitnehmer kann somit ruckfrei und aus der durch die Linearmotor-Anordnung des Transferabschnitts 18A, 18B bewirkten Bewegung heraus in den Abschnitt 40 der Antriebsnut 26 eingreifen. Sobald der Mitnehmer eines derart übernommenen Schlittens 14 von dem geraden Abschnitt 40 in den schraubenförmig verlaufenden Abschnitt 42 gelangt ist, wird der erste Trommelabschnitt 30A zu einer Drehbewegung angetrieben. Die Drehbewegung wird beschleunigt, bis die Drehgeschwindigkeit des ersten Trommelabschnitts 30A der Drehgeschwindigkeit des zweiten Trommelabschnitts 30B entspricht und ein Ausgangsbereich des Abschnitts 42 und ein Eingangsbereich des an dem Trommelabschnitt 30B vorgesehenen Teils der Antriebsnut 26 ineinander übergehen. Mit anderen Worten wird der Abschnitt 30A beschleunigt, bis eine Synchronisierung der Abschnitte 30A, 30B erreicht wurde. Der Mitnehmer des auf diese Weise beschleunigten Schlittens 14 gelangt dann ruckfrei in den zweiten Trommelabschnitt 30B und wird von diesem entlang der Transportrichtung T transportiert. Es versteht sich, dass der zweite Trommelabschnitt 30B abhängig von seiner Länge sowie von den Abmessungen der Schlitten 14 mehrere Schlitten 14 gleichzeitig transportieren kann, falls dies gewünscht ist.

Sobald der Schlitten 14 dem zweiten Trommelabschnitt 30B zugeführt wurde, sorgt die Steuereinrichtung dafür, dass der erste Trommelabschnitt 30A für eine Übernahme eines nachfolgenden Schlittens 14 wieder in die in Fig. 2 und 3 dargestellte Empfangs-Drehstellung bewegt wird.

Aufgrund der Ausbildung der Antriebseinheiten 20A, 20B, die auch unterschiedlich ausgestaltet sein können, mit mehreren separaten und unabhängig voneinander antreibbaren Trommelabschnitten 30A, 30B sowie aufgrund des kombinierten Antriebs mittels der Antriebseinheiten 20A, 20B einerseits und der Linearmotor-Anordnung andererseits kann ein besonders hoher Durchsatz bei der Bearbeitung von aufeinanderfolgend transportierten Objekten erzielt werden.

### Bezugszeichenliste

- 10: Transportvorrichtung
- 12: Schiene
- 14: Schlitten
- 16A, 16B: Prozessabschnitt
- 18A, 18B: Transferabschnitt
- 20A, 20B: Antriebseinheit
- 22: Kurventrommel
- 24: Motoranordnung
- 26: Antriebsnut
- 30A: erster Trommelabschnitt
- 30B: zweiter Trommelabschnitt
- 32A, 32B: Einzel-Motoreinheit
- 34A, 34B: Getriebeeinheit
- 40: gerader Abschnitt
- 42: schraubenförmig verlaufender Abschnitt

- D: Drehachse
- T: Transportrichtung

## Patentansprüche

1. Antriebseinheit (20A, 20B) zum Antrieb eines entlang einer Transportbahn verfahrbaren Schlittens (14)
mit einer zu einer Drehbewegung antreibbaren Kurventrommel (22), welche eine Antriebsnut (26) für einen Eingriff eines an dem Schlitten (14) angeordneten Mitnehmers aufweist, und mit einer Steuereinrichtung zur Steuerung des Antriebs des Schlittens (14), wobei
die Kurventrommel (22) einen ersten Trommelabschnitt (30A) und einen davon getrennten zweiten Trommelabschnitt (30B) aufweist, der insbesondere unmittelbar an den ersten Trommelabschnitt (30A) anschließt, wobei die Trommelabschnitte (30A, 30B) unabhängig voneinander antreibbar sind und wobei die Steuereinrichtung dazu ausgebildet ist, den Schlitten (14) nach einer Übernahme von einer separaten Antriebseinheit mittels des ersten Trommelabschnitts (30A) zu beschleunigen und den beschleunigten Schlitten (14) dem zweiten Trommelabschnitt (30B) zuzuführen, **dadurch gekennzeichnet, dass**
die Antriebsnut (26) im Bereich des ersten Trommelabschnitts (30A) einen sich parallel zu einer Transportrichtung (T) und/oder parallel zu einer Drehachse (D) der Kurventrommel (22) erstreckenden geraden Abschnitt (40) und einen sich daran anschließenden schraubenförmig verlaufenden Abschnitt (42) umfasst, wobei der erste Trommelabschnitt (30A) zu einer Drehbewegung angetrieben und dabei beschleunigt wird,
bis die Drehgeschwindigkeit des ersten Trommelabschnitts (30A) der Drehgeschwindigkeit des zweiten Trommelabschnitts (30B) entspricht und der Ausgangsbereich des Abschnitts (42) und ein Eingangsbereich des an dem Trommelabschnitt (30B) vorgesehenen Teils der Antriebsnut (26) ineinander übergehen.

2. Antriebseinheit nach Anspruch 1,
**dadurch gekennzeichnet, dass**
der erste und der zweite Trommelabschnitt (30A, 30B) koaxial zueinander angeordnet sind, insbesondere wobei der erste Trommelabschnitt (30A) auf einer Welle des zweiten Trommelabschnitts (30B) drehbar gelagert ist.

3. Antriebseinheit nach einem der vorstehenden Ansprüche,
**dadurch gekennzeichnet, dass**
die Antriebsnut (26) im Bereich des ersten Trommelabschnitts (30A) einen schraubenförmig verlaufenden Abschnitt (42) aufweist, der sich über einen Drehwinkel von höchstens 180° erstreckt.

4. Antriebseinheit nach einem der vorstehenden Ansprüche,
**dadurch gekennzeichnet, dass**
die Antriebsnut (26) im Bereich des ersten Trommelabschnitts (30A) einen eingangsseitigen Einführbereich (40) aufweist, der sich parallel zu einer Transportrichtung (T) des Schlittens (14) und/oder parallel zu einer Drehachse (D) der Kurventrommel (22) erstreckt.

5. Antriebseinheit nach einem der vorstehenden Ansprüche,
**dadurch gekennzeichnet, dass**
die Antriebsnut (26) in einem an den zweiten Trommelabschnitt (30B) angrenzenden Bereich des ersten Trommelabschnitts (30A) einen Abführbereich (42) aufweist, in welchem eine Steigung der Antriebsnut (26) relativ zu einer Drehachse (D) der Kurventrommel (22) einer Steigung der Antriebsnut (26) in einem angrenzenden Abschnitt des zweiten Trommelabschnitts (30B) entspricht.

6. Antriebseinheit nach einem der vorstehenden Ansprüche,
**dadurch gekennzeichnet, dass**
Mittel zum Bestimmen einer momentanen Drehgeschwindigkeit des zweiten Trommelabschnitts (30B) und gegebenenfalls des ersten Trommelabschnitts (30A) vorgesehen sind, wobei die Steuereinrichtung dazu ausgebildet ist, den ersten Trommelabschnitt (30A) nach einer Übernahme des Schlittens (14) von einer Anfangs-Drehgeschwindigkeit, welche vorzugsweise Null beträgt, auf eine End-Drehgeschwindigkeit zu beschleunigen, welche der momentanen Drehgeschwindigkeit des zweiten Trommelabschnitts (30B) entspricht, und/oder dass
Mittel zum Erfassen einer momentanen Drehstellung des ersten Trommelabschnitts (30A) vorgesehen sind, wobei die Steuereinrichtung dazu ausgebildet ist, den ersten Trommelabschnitt (30A) nach einem Zuführen des Schlittens (14) an den zweiten Trommelabschnitt (30B) für eine Übernahme eines nachfolgenden Schlittens (14) in eine vordefinierte Drehstellung zu bewegen.

7. Antriebseinheit nach einem der vorstehenden Ansprüche,
**dadurch gekennzeichnet, dass** die Steuereinrichtung dazu ausgebildet ist, den zweiten Trommelabschnitt (30B) zu einer Drehbewegung mit einer konstanten Drehgeschwindigkeit anzutreiben und/oder dass
die Antriebsnut (26) des zweiten Trommelabschnitts (30B) eine konstante Steigung aufweist.

8. Antriebseinheit nach einem der vorstehenden Ansprüche,
dadurch **gekennzichnet**, dass
die Steuereinrichtung dazu ausgebildet ist, den ersten Trommelabschnitt (30A) zu einer den Schlitten (14) beschleunigenden Drehbewegung anzutreiben, sobald der Mitnehmer eines übernommenen Schlittens (14) von dem geraden Abschnitt (40) in den schraubenförmig verlaufenden Abschnitt (42) gelangt ist.

9. Verfahren zum Transportieren von Objekten entlang einer Transportbahn, bei welchem ein entlang der Transportbahn verfahrbarer Schlitten (14), auf dem zumindest ein Objekt anzuordnen ist, von einem Transferabschnitt (18A, 18B) der Transportbahn auf einen für eine Bearbeitung der Objekte vorgesehenen Prozessabschnitt (16A, 16B) der Transportbahn überführt wird, wobei der Schlitten (14) in dem Prozessabschnitt (16A, 16B) mittels einer zu einer Drehbewegung antreibbaren ersten Kurventrommel (30B) angetrieben wird, welche eine Antriebsnut (26) aufweist, in die ein am Schlitten (14) angeordneter Mitnehmer eingreift, und wobei der Schlitten (14) in dem Transferabschnitt (18A, 18B) mittels eines separaten Antriebs, insbesondere mittels eines Band- oder Linearantriebs, zu einer Bewegung angetrieben wird, wobei
der Schlitten (14) zum Überführen von dem Transferabschnitt (18A, 18B) in den Prozessabschnitt (16A, 16B) mittels einer unabhängig von der ersten Kurventrommel (30B) antreibbaren zweiten Kurventrommel (30A) beschleunigt wird,
**dadurch gekennzeichnet, dass**
eine momentane Drehgeschwindigkeit der erste Kurventrommel (30B) bestimmt wird und die zweite Kurventrommel (30A) nach einer Übernahme des Schlittens (14) von einer Anfangs-Drehgeschwindigkeit auf eine End-Drehgeschwindigkeit beschleunigt wird, welche der momentanen Drehgeschwindigkeit der ersten Kurventrommel (30B) entspricht.

10. Verfahren nach Anspruch 9,
**dadurch gekennzeichnet, dass**
die zweite Kurventrommel (30A) von einer Anfangs-Drehgeschwindigkeit, welche Null beträgt, auf die End-Drehgeschwindigkeit beschleunigt wird.

11. Verfahren nach Anspruch 9 oder 10,
**dadurch gekennzeichnet, dass**
die erste Kurventrommel (30B) zu einer Drehbewegung mit einer konstanten Drehgeschwindigkeit angetrieben wird und/oder dass die Antriebsnut (26) der zweiten Kurventrommel (30A) eine konstante Steigung aufweist.

12. Verfahren nach einem der Ansprüche 9 bis 11,
**dadurch gekennzeichnet, dass**
eine momentane Drehstellung der zweiten Kurventrommel (30A) erfasst wird und die zweite Kurventrommel (30A) nach einem Zuführen des beschleunigten Schlittens (14) an die erste Kurventrommel (30B) für eine Übernahme eines nachfolgenden Schlittens (14) in eine vordefinierte Drehstellung gedreht wird.

13. Verfahren nach einem der Ansprüche 9 bis 12,
**dadurch gekennzeichnet, dass**
die zweite Kurventrommel (30A) zu einer den Schlitten (14) beschleunigenden Drehbewegung angetrieben wird, sobald der Mitnehmer des Schlittens (14) von einem sich parallel zu einer Transportrichtung (T) und/oder parallel zu einer Drehachse (D) der zweiten Kurventrommel (30A) erstreckenden geraden Abschnitt (40) einer Antriebsnut (26) der zweiten Kurventrommel (30A) in einen sich daran anschließenden schraubenförmig verlaufenden Abschnitt (42) der Antriebsnut (26) gelangt ist.

14. Transportvorrichtung (10) zum Transportieren von Objekten entlang einer Transportbahn,
mit wenigstens einem entlang der Transportbahn - vorzugsweise eine Kreisbahn - verfahrbaren Schlitten (14), der zur Aufnahme wenigstens eines zu transportierenden Objekts ausgebildet ist, und mit Mitteln zum gesteuerten Antreiben des Schlittens (14), wobei die Transportbahn wenigstens einen für eine Bearbeitung der Objekte vorgesehenen Prozessabschnitt (16A, 16B) und wenigstens einen davon getrennten Transferabschnitt (18A, 18B) umfasst, wobei zum Antrieb des Schlittens (14) in dem Prozessabschnitt (16A, 16B) eine Antriebseinheit (20A, 20B) mit wenigstens einer zu einer Drehbewegung antreibbaren Kurventrommel (22) vorgesehen ist, welche eine Antriebsnut (26) aufweist, in die ein an dem Schlitten (14) angeordneter Mitnehmer eingreift, und wobei zum Antrieb des Schlittens (14) in dem Transferabschnitt (18A, 18B) ein Linearmotor mit zumindest einem ortsfesten Statorelement und einem an dem Schlitten angeordneten Läuferelement vorgesehen ist,
**dadurch gekennzeichnet, dass**
die Antriebseinheit (20A, 20B) gemäß zumindest einem der Ansprüche 1 bis 8 ausgebildet ist.

## Claims

1. A drive unit (20A, 20B) for driving a carriage (14) travelable along a transport path
having a barrel cam (22) which is drivable to make a rotational movement and which has a drive groove (26) for an engagement of a follower arranged at the carriage (14), and having a control device for controlling the drive of the carriage (14), wherein
the barrel cam (22) has a first barrel section (30A) and a second barrel section (30B) which is separate therefrom and which in particular directly adjoins the first barrel section (30A); wherein the barrel sections (30A, 30B) are drivable independently of one another; and wherein the control device is configured to accelerate the carriage (14) after a takeover from a separate drive unit by means of the first barrel section (30A) and to supply the accelerated carriage (14) to the second barrel section (30B), **characterized in that**
the drive groove (26) comprises a straight section (40) extending in parallel with a direction of transport (T) and/or in parallel with an axis of rotation (D) of the barrel cam (22) and a spirally extending section (42) adjoining it in the region of the first barrel section (30A), with the first barrel section (30A) being driven to make a rotational movement and being accelerated in so doing until the speed of rotation of the first barrel section (30A) corresponds to the speed of rotation of the second barrel section (30B) and an outlet region of the section (42) and an inlet region of the part of the drive groove (26) provided at the barrel section (30B) merge into one another.

2. A drive unit in accordance with claim 1,
**characterized in that**
the first and second barrel sections (30A, 30B) are arranged coaxially to one another, in particular with the first barrel section (30A) being rotatably supported on a shaft of the second barrel section (30B).

3. A drive unit in accordance with one of the preceding claims,
**characterized in that**
the drive groove (26) has a spirally extending section (42), which extends over an angle of rotation of at most 180°, in the region of the first barrel section (30A).

4. A drive unit in accordance with any one of the preceding claims,
**characterized in that**
the drive groove (26) has an introduction region (40) at the inlet side in the region of the first barrel section (30A), said introduction region (40) extending in parallel with a direction of transport (T) of the carriage (14) and/or in parallel with an axis of rotation (D) of the barrel cam (22).

5. A drive unit in accordance with any one of the preceding claims,
**characterized in that**
the drive groove (26) has a discharge region (42) in a region of the first barrel section (30A) adjacent to the second barrel section (30B), in which discharge region (42) a pitch of the drive groove (26) relative to an axis of rotation (D) of the barrel cam (22) corresponds to a pitch of the drive groove (26) in an adjacent section of the second barrel section (30B).

6. A drive unit in accordance with any one of the preceding claims,
**characterized in that**
means are provided for determining an instantaneous speed of rotation of the second barrel section (30B) and, optionally, of the first barrel section (30A), with the control device being configured to accelerate the first barrel section (30A) after a takeover of the carriage (14) from a starting speed of rotation which preferably amounts to zero to an end speed of rotation which corresponds to the instantaneous speed of rotation of the second barrel section (30B); and/or **in that**
means are provided for detecting an instantaneous rotational position of the first barrel section (30A), with the control device being configured to move the first barrel section (30A) into a predefined rotational position after a supply of the carriage (14) to the second barrel section (30B) for a takeover of a subsequent carriage (14).

7. A drive unit in accordance with any one of the preceding claims,
**characterized in that**
the control device is configured to drive the second barrel section (30B) to make a rotational movement at a constant speed of rotation; and/or **in that** the drive groove (26) of the second barrel section (30B) has a constant pitch.

8. A drive unit in accordance with any one of the preceding claims,
**characterized in that**
the control device is configured to drive the first barrel section (30A) to make a rotational movement which accelerates the carriage (14) as soon as the follower of a taken-over carriage (14) has moved from the straight section (40) into the spirally extending section (42).

9. A method of transporting objects along a transport path in which a carriage (14) which is travelable along the transport path and on which at least one object is to be arranged is moved from a transfer section (18A, 18B) of the transport path onto a process section (16A, 16B) of the transport path provided for a machining of the objects, wherein the carriage (14) is driven in the process section (16A, 16B) by means of a first barrel cam (30B) which is drivable to make a rotational movement and which has a drive groove (26) into which a follower arranged at the carriage (14) engages; and wherein the carriage (14) is driven to make a movement in the transfer section (18A, 18B) by means of a separate drive, in particular by means of a belt drive or linear drive, wherein
the carriage (14) is accelerated by means of a second barrel cam (30A) drivable independently of the first barrel cam (30B) to move from the transfer section (18A, 18B) into the process section (16A, 16B), **characterized in that**
an instantaneous speed of rotation of the first barrel cam (30B) is determined and the second barrel cam (30A) is accelerated after a takeover of the carriage (14) from a starting speed of rotation to an end speed of rotation which corresponds to the instantaneous speed of rotation of the first barrel cam (30B).

10. A method in accordance with claim 9,
**characterized in that**
the second barrel cam (30A) is accelerated from a starting speed of rotation which amounts to zero to the end speed of rotation.

11. A method in accordance with claim 9 or claim 10,
**characterized in that**
the first barrel cam (30B) is driven to make a rotational movement at a constant speed of rotation; and/or **in that** the drive groove (26) of the second barrel cam (30A) has a constant pitch.

12. A method in accordance with any one of the claims 9 to 11,
**characterized in that**
an instantaneous rotational position of the second barrel cam (30A) is detected and the second barrel cam (30A) is rotated into a predefined rotational position after a supply of the accelerated carriage (14) to the first barrel cam (30B) for a takeover of a subsequent carriage (14).

13. A method in accordance with any one of the claims 9 to 12,
**characterized in that**
the second barrel cam (30A) is driven to make a rotational movement accelerating the carriage (14) as soon as the follower of the carriage (14) has moved from a straight section (40) of a drive groove (26) of the second barrel cam (30A) extending in parallel with a direction of transport (T) and/or in parallel with an axis of rotation (D) of the second barrel cam (30A) into a spirally extending section (42) of the drive groove (26) adjoining said straight section (40).

14. A transport apparatus (10) for transporting objects along a transport path, having at least one carriage (14) - preferably a circular path - which is travelable along the transport path and which is configured for receiving at least one object to be transported, and having means for the controlled driving of the carriage (14), wherein the transport path comprises at least one process section (16A, 16B) provided for a machining of the objects and at least one transfer section (18A, 18B) separate therefrom; wherein a drive unit (20A, 20B) having at least one barrel cam (22) drivable to make a rotational movement is provided for driving the carriage (14) in the process section (16A, 16B), said barrel cam (22) having a drive groove (26) into which a follower arranged at the carriage (14) engages; and wherein a linear motor having at least one fixed-position stator element and a runner element arranged at the carriage is provided for driving the carriage (14) in the transfer section (18A, 18B),
**characterized in that**
the drive unit (20A, 20B) is configured in accordance with at least one of the claims 1 to 8.

## Revendications

1. Unité d'entraînement (20A, 20B) pour entraîner un chariot (14) mobile le long d'une voie de transport,
comprenant un tambour à cames (22) pouvant être entraîné en un mouvement de rotation et présentant une rainure d'entraînement (26) pour l'engagement d'un élément d'entraînement disposé sur le chariot (14), et comprenant un appareil de commande pour commander l'entraînement du chariot (14),
le tambour à cames (22) présentant une première section de tambour (30A) et une deuxième section de tambour (30B) séparée de la première section de tambour (30A) et en particulier directement adjacente à celle-ci, les sections de tambour (30A, 30B) pouvant être entraînées indépendamment l'une de l'autre et l'appareil de commande étant conçu pour, après une prise en charge depuis une unité d'entraînement séparée, accélérer le chariot (14) au moyen de la première section de tambour (30A) et amener le chariot accéléré (14) à la deuxième section de tambour (30B),
**caractérisée en ce que**
la rainure d'entraînement (26) comprend dans la zone de la première section de tambour (30A) une section droite (40) s'étendant parallèlement à une direction de transport (T) et/ou parallèlement à un axe de rotation (D) du tambour à cames (22) et une section adjacente (42) s'étendant en forme d'hélice, la première section de tambour (30A) étant entraînée en un mouvement de rotation et accélérée jusqu'à ce que la vitesse de rotation de la première section de tambour (30A) corresponde à la vitesse de rotation de la deuxième section de tambour (30B) et que la zone de sortie de la section (42) et une zone d'entrée de la partie de la rainure d'entraînement (26) prévue sur la section de tambour (30B) passent de l'une à l'autre.

2. Unité d'entraînement selon la revendication 1,
**caractérisée en ce que**
la première et la deuxième section de tambour (30A, 30B) sont disposées coaxialement l'une à l'autre, en particulier la première section de tambour (30A) étant montée rotative sur un arbre de la deuxième section de tambour (30B).

3. Unité d'entraînement selon l'une des revendications précédentes,
**caractérisée en ce que**
la rainure d'entraînement (26) présente dans la zone de la première section de tambour (30A) une section s'étendant en forme d'hélice (42) qui s'étend sur un angle de rotation d'au plus 180°.

4. Unité d'entraînement selon l'une des revendications précédentes,
**caractérisée en ce que**
la rainure d'entraînement (26) présente dans la zone de la première section de tambour (30A) une zone d'introduction côté entrée (40) qui s'étend parallèlement à une direction de transport (T) du chariot (14) et/ou parallèlement à un axe de rotation (D) du tambour à cames (22).

5. Unité d'entraînement selon l'une des revendications précédentes,
**caractérisée en ce que**
la rainure d'entraînement (26) présente dans une zone de la première section de tambour (30A) adjacente à la deuxième section de tambour (30B) une zone de décharge (42) dans laquelle un pas de la rainure d'entraînement (26) par rapport à un axe de rotation (D) du tambour à came (22) correspond à un pas de la rainure d'entraînement (26) dans une section adjacente de la deuxième section de tambour (30B).

6. Unité d'entraînement selon l'une des revendications précédentes,
**caractérisée en ce que**
des moyens sont prévus pour déterminer une vitesse de rotation instantanée de la deuxième section de tambour (30B) et, éventuellement, de la première section de tambour (30A), l'appareil de commande étant conçu pour, après une prise en charge du chariot (14), accélérer la première section de tambour (30A) d'une vitesse de rotation initiale, de préférence nulle, à une vitesse de rotation finale qui correspond à la vitesse de rotation instantanée de la deuxième section de tambour (30B) et/ou que
des moyens sont prévus pour détecter une position de rotation instantanée de la première section de tambour (30A), l'appareil de commande étant conçu pour déplacer la première section de tambour (30A) dans une position de rotation prédéfinie après une amenée du chariot (14) à la deuxième section de tambour (30B) pour une prise en charge d'un chariot suivant (14).

7. Unité d'entraînement selon l'une des revendications précédentes,
**caractérisée en ce que**
l'appareil de commande est conçu pour entraîner la deuxième section de tambour (30B) en un mouvement de rotation à une vitesse de rotation constante et/ou que
la rainure d'entraînement (26) de la deuxième section de tambour (30B) présente un pas constant.

8. Unité d'entraînement selon l'une des revendications précédentes,
**caractérisée en ce que**
l'appareil de commande est conçu pour entraîner la première section de tambour (30A) en un mouvement de rotation qui accélère le chariot (14) dès que l'élément d'entraînement d'un chariot pris en charge (14) est passé de la section droite (40) dans la section s'étendant en forme d'hélice (42).

9. Procédé de transport d'objets le long d'une voie de transport, selon lequel
un chariot (14) déplaçable le long de la voie de transport, et sur lequel au moins un objet doit être disposé, est transféré d'une section de transfert (18A, 18B) de la voie de transport vers une section de traitement (16A, 16B) de la voie de transport prévue pour un traitement des objets, le chariot (14) étant entraîné dans la section de traitement (16A, 16B) au moyen d'un premier tambour à cames (30B) qui peut être entraîné en un mouvement de rotation et présente une rainure d'entraînement (26) dans laquelle s'engage un élément d'entraînement disposé sur le chariot (14), et le chariot (14) étant entraîné en un mouvement dans la section de transfert (18A, 18B) au moyen d'un entraînement séparé, en particulier au moyen d'un entraînement par courroie ou linéaire,
le chariot (14) étant accéléré pour le transfert de la section de transfert (18A, 18B) dans la section de traitement (16A, 16B) au moyen d'un deuxième tambour à cames (30A) pouvant être entraîné indépendamment du premier tambour à cames (30B),
**caractérisé en ce**
**qu'**une vitesse de rotation instantanée du premier tambour à cames (30B) est déterminée et, après une prise en charge du chariot (14), le deuxième tambour à cames (30A) est accéléré d'une vitesse de rotation initiale à une vitesse de rotation finale qui correspond à la vitesse de rotation instantanée du premier tambour à cames (30B).

10. Procédé selon la revendication 9,
**caractérisé en ce que**
le deuxième tambour à cames (30A) est accéléré d'une vitesse de rotation initiale qui est nulle à la vitesse de rotation finale.

11. Procédé selon la revendication 9 ou 10,
**caractérisé en ce que**
le premier tambour à cames (30B) est entraîné en un mouvement de rotation à une vitesse de rotation constante et/ou que la rainure d'entraînement (26) du deuxième tambour à cames (30A) présente un pas constant.

12. Procédé selon l'une des revendications 9 à 11,
**caractérisé en ce**
**qu'**une position de rotation instantanée du deuxième tambour à cames (30A) est détectée et que le deuxième tambour à cames (30A) est tourné dans une position de rotation prédéfinie après une amenée du chariot accéléré (14) au premier tambour à cames (30B) pour une prise en charge d'un chariot suivant (14).

13. Procédé selon l'une des revendications 9 à 12,
**caractérisé en ce que**
le deuxième tambour à cames (30A) est entraîné en un mouvement de rotation qui accélère le chariot (14) dès que l'élément d'entraînement du chariot (14) est passé d'une section droite (40) d'une rainure d'entraînement (26) du deuxième tambour à cames (30A) qui s'étend parallèlement à une direction de transport (T) et/ou parallèlement à un axe de rotation (D) du deuxième tambour à cames (30A) dans une section (42) adjacente s'étendant en forme d'hélice de la rainure d'entraînement (26).

14. Dispositif de transport (10) pour transporter des objets le long d'une voie de transport,
comportant au moins un chariot (14) mobile le long de la voie de transport - de préférence une voie circulaire - et conçu pour recevoir au moins un objet à transporter, et comportant des moyens pour l'entraînement commandé du chariot (14), la voie de transport comprenant au moins une section de traitement (16A, 16B) prévue pour un traitement des objets et au moins une section de transfert (18A, 18B) qui en est séparée, une unité d'entraînement (20A, 20B) comportant au moins un tambour à cames (22) qui peut être entraîné en un mouvement de rotation étant prévue dans la section de traitement (16A, 16B) pour l'entraînement du chariot (14), laquelle présente une rainure d'entraînement (26) dans laquelle s'engage un élément d'entraînement disposé sur le chariot (14), et un moteur linéaire comportant au moins un élément stator fixe et un élément rotor disposé sur le chariot étant prévu pour l'entraînement du chariot (14) dans la section de transfert (18A, 18B),
**caractérisé en ce que** l'unité d'entraînement (20A, 20B) est réalisée selon au moins l'une des revendications 1 à 8.
